# EUROPEAN PATENT APPLICATION

(11) **EP 4 679 839 A1**
(43) Date of publication of application: **14.01.2026**
(21) Application number: 24860068.6
(22) Date of filing: 04.06.2024
(51) Int. Cl.: H04N 21/4363, H04N 21/436, H04N 21/4402, H04N 21/434

(54) **ELECTRONIC DEVICE, DISPLAY DEVICE, AND CONTROL METHOD THEREFOR**

(30) Priority: 30.08.2023 KR 20230114770; 05.12.2023 KR 20230174869
(71) Applicant: Samsung Electronics Co., Ltd., Suwon-si, Gyeonggi-do 16677 (KR)
(72) Inventor: KIM, Minho, Suwon-si Gyeonggi-do 16677 (KR); KANG, Wooseok, Suwon-si Gyeonggi-do 16677 (KR); KIM, Doohyun, Suwon-si Gyeonggi-do 16677 (KR); YOO, Kiwon, Suwon-si Gyeonggi-do 16677 (KR); JI, Kumran, Suwon-si Gyeonggi-do 16677 (KR); CHOI, Bumkwi, Suwon-si Gyeonggi-do 16677 (KR)
(74) Representative: Appleyard Lees IP LLP
(86) International application number: PCT/KR2024/007660
(87) International publication number: WO 2025/048143

(57) **Abstract**

An electronic apparatus may include: an input/output interface configured to receive digital image content that is not compressed; a communication device configured to transmit and receive data wirelessly; at least one memory storing instructions; and at least one processor configured to obtain packet data corresponding to the digital image content and control the communication device to transmit the packet data. The at least one processor may be further configured to execute the instructions to: separate video information, audio information, and meta information in the digital image content; perform encoding in preset units of blocks using the video information in preset units of lines among the video information to obtain encoded video information; packetize each of the encoded video information, the audio information, and the meta information to obtain the packet data; and control the communication device to wireless transmit the packet data to a display device.

## Description

### [Technical Field]

The present disclosure relates to an electronic apparatus, a display apparatus, and a controlling method thereof. More specifically, the disclosure relates to an electronic apparatus, a display apparatus, and a controlling method thereof capable of wirelessly transmitting streaming data received by wire.

### [Background Art]

A display apparatus processes and displays digital or analog image signals received from the outside or various image signals or the like stored as compressed files in various formats in an internal storage device.

Meanwhile, the display apparatus supports an HDMI terminal to receive various digital images, and receives image data from external apparatuses (e.g., set-top box), a game machine, etc., through the HDMI terminal.

### [Disclosure]

### [Technical Solution]

However, since such a wired connection requires a separate cable or does not satisfy aesthetic portions of the display apparatus, a wireless connection method is desirable.

According to one or more example embodiments, an electronic apparatus may include: an input/output interface configured to receive digital image content that is not compressed; a communication device configured to transmit and receive data wirelessly; at least one memory storing instructions; and at least one processor configured to obtain packet data corresponding to the digital image content and control the communication device to transmit the packet data. The at least one processor may be further configured to execute the instructions to: separate video information, audio information, and meta information in the digital image content; perform encoding in preset units of blocks using the video information in preset units of lines among the video information to obtain encoded video information; packetize each of the encoded video information, the audio information, and the meta information to obtain the packet data; and control the communication device to wirelessly transmit the packet data to a display device.

The at least one processor may be further configured to execute the instructions to: based on the video information in the preset units of lines among a plurality of video information constituting one frame in the digital image content being buffered video information, perform an encoding operation using the buffered video information in the preset units of lines.

The at least one processor may be further configured to execute the instructions to: store information on the one frame in the at least one memory when the encoding of the one frame in the digital image content is completed; and perform the encoding operation using the video information in the preset units of lines and frame information corresponding to the preset units of lines in a stored previous frame.

The at least one processor may include a plurality of encoding cores configured to perform the encoding in the preset units of blocks on a plurality of different lines.

The at least one processor may be further configured to execute the instructions to: perform the encoding at a bit rate based on complexity of the video information during performing the encoding in the preset units of blocks.

The at least one processor may be further configured to execute the instructions to: separate data outside a preset section in a signal received from the input/output interface into image information; and confirm a packet type of a signal within the preset section to separate the meta information and the audio information.

The at least one processor may be further configured to execute the instructions to: obtain a frame index based on a synchronization signal in a signal received from the input/output interface; and add a header may include the frame index to each of the encoded video information, the audio information, and the meta information.

The at least one processor may be further configured to execute the instructions to: based on the audio information may include an audio sample and a header corresponding to the audio sample: merge a preset number of audio samples to obtain merged audio samples and obtain an audio payload; obtain a header corresponding to the audio payload using headers of each of the merged audio samples; and combine the audio payload and the header to obtain a wireless audio packet.

The at least one processor may be further configured to execute the instructions to obtain the header corresponding to the audio payload to comprise frame index information corresponding to a location of the audio information.

The at least one processor may be further configured to execute the instructions to: merge the meta information in units of frames to obtain a meta payload; obtain a meta header may include frame index information corresponding to the meta information; and combine the meta header and the meta payload to obtain a wireless meta packet.

The at least one processor may be further configured to execute the instructions to obtain the packet data may include one of the encoded video information, the audio information, and the meta information and division information indicating a type of data in a data area.

The at least one processor may be further configured to execute the instructions to control the communication device to transmit the packet data corresponding to the meta information among the packet data with a highest priority.

According to one or more example embodiments, a controlling method of an electronic apparatus may include, using at least one processor: separating video information, audio information, and meta information in digital image content that is not compressed; performing encoding in preset units of blocks using video information in preset units of lines among the video information to obtain encoded video information; packetizing each of the encoded video information, the audio information, and the meta information to obtain packet data; and controlling a communication device to wirelessly transmit the packet data to a display device.

The controlling method further may include, based on the video information in the preset units of lines among a plurality of video information constituting one frame in the digital image content being buffered video information, performing the encoding using the buffered video information in the preset units of lines.

According to one or more example embodiments, a non-transitory computer-readable recording medium in which a program for causing at least one processor to execute a controlling method of an electronic apparatus is stored, wherein the controlling method may include: separating video information, audio information, and meta information in digital video content that is not compressed; performing encoding in preset units of blocks using video information in preset units of lines among the video information to obtain encoded video information; packetizing each of the encoded video information, the audio information, and the meta information to obtain packet data; and controlling a communication device to wirelessly transmit the packet data to a display device.

The controlling method further may include: based on the video information in the preset units of lines among a plurality of video information constituting one frame in the digital image content being buffered video information, performing an encoding using the buffered video information in the preset units of lines.

The controlling method further may include: storing information on the one frame in at least one memory when the encoding of the one frame in the digital image content is completed; and performing the encoding using the video information in the preset units of lines and frame information corresponding to the preset units of lines in a stored previous frame.

The controlling method further may include performing the encoding at a bit rate based on complexity of the video information during performing the encoding in the preset units of blocks.

The controlling method further may include: separating data outside a preset section in a signal received from the input/output interface into image information; and confirming a packet type of a signal within the preset section to separate the meta information and the audio information.

The controlling method further may include: obtaining a frame index based on a synchronization signal in a signal received from the input/output interface; and adding a hea der may include the frame index to each of the encoded video information, the audio informati on, and the meta information.

### [Description of Drawings]

The above and/or other aspects of the disclosure will be more apparent by describing certain embodiments of the disclosure with reference to the accompanying drawings, in which:
FIG. 1 is a diagram of an operation of an electronic apparatus according to one or more embodiments of the present disclosure;
FIG. 2 is a diagram of a configuration of the electronic apparatus according to one or more embodiments of the present disclosure;
FIG. 3 is a block diagram of the configuration of the display apparatus according to one or more embodiments of the present disclosure;
FIG. 4 is a block diagram of the configuration of the display apparatus according to one or more embodiments of the present disclosure;
FIG. 5 is a timing diagram of a HDMI signal according to one or more embodiments of the present disclosure;
FIG. 6 is a diagram of an example of metadata arrangement in the HDMI signal according to one or more embodiments of the present disclosure;
FIG. 7 is a diagram of a method of wirelessly transmitting an HDMI signal according to one or more embodiments of the present disclosure;
FIG. 8 is a diagram of a system for wirelessly transmitting an image according to one or more embodiments of the present disclosure;
FIG. 9 is a diagram illustrating a method of processing each HDMI signal attribute according to one or more embodiments of the present disclosure;
FIG. 10 is a diagram of an image encoding operation according to one or more embodiments of the present disclosure;
FIG. 11 is a diagram of a line buffering operation according to one or more embodiments of the present disclosure;
FIG. 12 is a diagram of a bit rate operation according to one or more embodiments of the present disclosure;
FIG. 13 is a diagram of an operation of processing audio data according to one or more embodiments of the present disclosure;
FIG. 14 is a diagram of an operation of a transmission buffer according to one or more embodiments of the present disclosure;
FIG. 15 is a diagram of an operation of generating a control signal according to the present disclosure;
FIG. 16 is a diagram of an example of a transmission packet according to one or more embodiments of the present disclosure;
FIG. 17 is a diagram of a reception operation according to one or more embodiments of the present disclosure;
FIG. 18 is a diagram of an operation of generating a synchronization signal according to one or more embodiments of the present disclosure;
FIG. 19 is a flowchart of an operation of controlling an electronic apparatus according to one or more embodiments of the present disclosure; and
FIG. 20 is a flowchart of a display method according to one or more embodiments of the present disclosure.

### [Mode for Invention]

Since the present disclosure may be variously modified and have several embodiments, specific embodiments of the present disclosure will be illustrated in the drawings and be described in detail. However, it is to be understood that the disclosure are not limited to specific embodiments, but include all modifications, equivalents, and substitutions according to embodiments of the present disclosure. Throughout the accompanying drawings, similar components will be denoted by similar reference numerals.

In describing the present disclosure, when it is decided that a detailed description for the known functions or configurations related to the present disclosure may unnecessarily obscure the gist of the present disclosure, the detailed description therefor will be omitted.

In addition, the following embodiments may be modified in several different forms, and the scope and spirit of the present disclosure are not limited to the following embodiments. Rather, these embodiments make the disclosure thorough and complete, and are provided to completely transfer the spirit of the disclosure to those skilled in the art.

Terms used in the specification are used only to describe specific embodiments rather than limiting the scope of the disclosure. Singular forms are intended to include plural forms unless the context clearly indicates otherwise.

In the present disclosure, an expression "have," "may have," "include," "may include," or the like, indicates existence of a corresponding feature (for example, a numerical value, a function, an operation, a component such as a part, or the like), and does not exclude existence of an additional feature.

In the present disclosure, an expression "A or B", "at least one of A and/or B", "one or more of A and/or B", or the like, may include all possible combinations of items enumerated together. For example, "A or B," "at least one of A and B," or "at least one of A or B" may indicate all of 1) a case in which at least one A is included, 2) a case in which at least one B is included, or 3) a case in which both of at least one A and at least one B are included.

Expressions "first," "second," "1st" or "2nd" or the like, used in the present disclosure may indicate various components regardless of a sequence and/or importance of the components, will be used only in order to distinguish one component from the other components, and do not limit the corresponding components.

When it is mentioned that any component (for example: a first component) is (operatively or communicatively) "coupled with/to" or is connected to another component (for example: a second component), it is to be understood that any component is directly coupled to another component or may be coupled to another component through the other component (for example: a third component).

On the other hand, when it is mentioned that any component (for example, a first component) is "directly coupled" or "directly connected" to another component (for example, a second component), it is to be understood that the other component (for example, a third component) is not present between any component and another component.

An expression "~configured (or set) to" used in the disclosure may be replaced by an expression "~suitable for," "~having the capacity to," "~designed to," "~adapted to," "~made to," or "~capable of" depending on a situation. A term "configured (or set) to" may not necessarily mean "specifically designed to" in hardware.

Instead, an expression "~an apparatus configured to" may mean that the apparatus "~is capable of" together with other apparatuses or components. For example, a "processor configured (or set) to perform A, B, and C" may mean a dedicated processor (for example, an embedded processor) for performing the corresponding operations or a generic-purpose processor (for example, a central processing unit (CPU) or an application processor) that may perform the corresponding operations by executing one or more software programs stored in at least one memory device.

Elements described as "module" or "part" or "unit" or "device" may be physically implemented by analog and/or digital circuits including one or more of a logic gate, an integrated circuit, a microprocessor, a microcontroller, a memory circuit, a passive electronic component, an active electronic component, and the like.

Operations performed by the modules, the programs, or the other components according to the diverse embodiments may be executed in a sequential method, a parallel method, an iterative method, or a heuristic method, at least some of the operations may be performed in a different order or be omitted, or other operations may be added.

Meanwhile, various elements and regions in the drawings are schematically illustrated. Therefore, the spirit of the present disclosure is not limited by relatively sizes or intervals illustrated in the accompanying drawings.

Meanwhile, a display apparatus according to various embodiments of the present disclosure may include, for example, at least one of a smartphone, a tablet PC, a desktop PC, a laptop PC, and a projector.

In some embodiments, the display apparatus may include at least one of, for example, a television (TV), a digital video disk (DVD) player, an audio player, a refrigerator, an air conditioner, a cleaner, an oven, a microwave oven, a washing machine, an air cleaner, a robot vacuum cleaner, a set-top box, a home automation control panel, a security control panel, a media box (for example, HomeSyncTM of Samsung Electronics Co., Ltd, TVTM of Apple Inc, or TVTM of Google), a game console (for example, XboxTM, PlayStationTM), an electronic dictionary, an electronic key, a camcorder, and a digital photo frame. An example of the above-described apparatus is one example, and any apparatus may be used as long as it includes a display.

Hereinafter, embodiments of the present disclosure will be described in detail with reference to the accompanying drawings so that those skilled in the art to which the present disclosure pertains may easily practice the present disclosure.

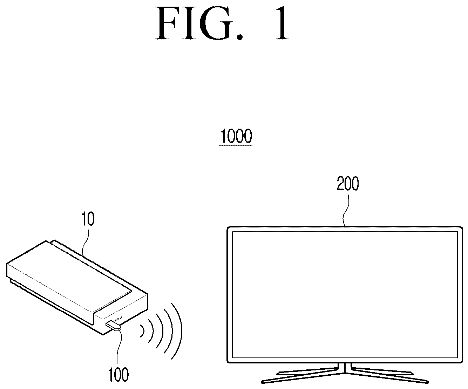

FIG. 1 is a diagram of an operation of an electronic apparatus according to one or more embodiments of the present disclosure.

Referring to FIG. 1, a display system 1000 may include a source device 10, an electronic apparatus 100, and a display apparatus 200.

The source device 10 may output digital image content using a preset interface method. Here, the digital image content may be movie content, music content, game content, web page or the like. The preset interface method is a method of inputting and outputting image (and voice) data by wire using an uncompressed method, and may be, for example, a high definition multimedia interface (HDMI). In the above, the above-described interface method is set assuming HDMI, but the above-described interface method is an uncompressed method other than HDMI and may be DisplayPort, mobile high-definition link (MHL), Thunderbolt, UTP, SATA, USB-C, etc., as long as it may input and output image data (or image content).

Such a source device 10 may be a set-top box, a game machine, a home theater, a PC, a laptop, etc., that receive wired signals or satellite signals as broadcast signals from broadcast signals. In addition to the above-described apparatus, any apparatus that may transmit digital image content using the above-described interface method may be used.

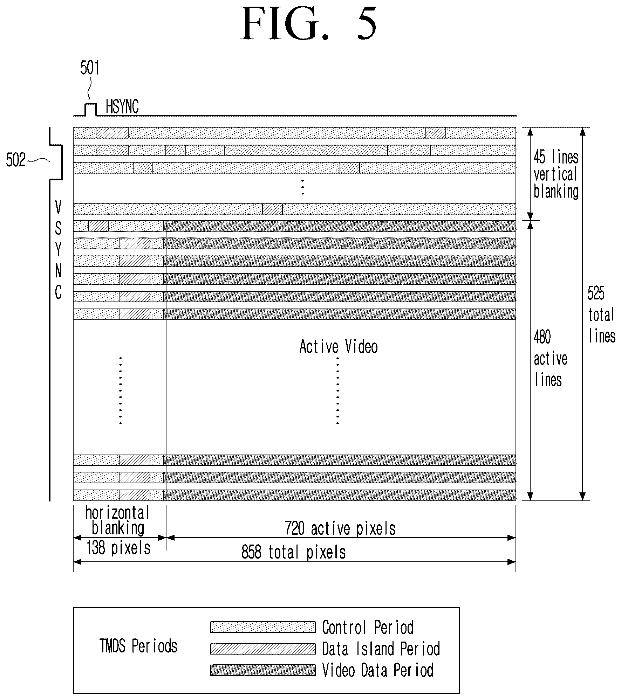

Here, as illustrated in FIG. 5, the image content may include image data, voice data, and meta data in accordance with a HDMI standard, but since the HDMI standard may not include voice data and may include only image data, the HDMI standard refers to a case composed of image data, voice data, and meta data, a case composed of image data and meta data, a case composed of voice data and meta data, etc.

In the following, for ease of description, the description is made under the assumption that all three types of data (i.e., image data, voice data, and meta data) are included, but one of the above-described data types may be omitted when implementing.

In the following, to simplify the description, content transmitted using the above-described interface method is referred to as image content. The image content may be referred to as an HDMI signal, streaming data, a streaming signal, a high-resolution video signal, high-resolution image content, etc.

Data related to the image in the above-described image content is referred to as image data. Such image data may be referred to as frame data, screen data, a screen signal, an image signal, a frame signal, a pixel signal, pixel information, frame information, screen information, image information, video information, etc.

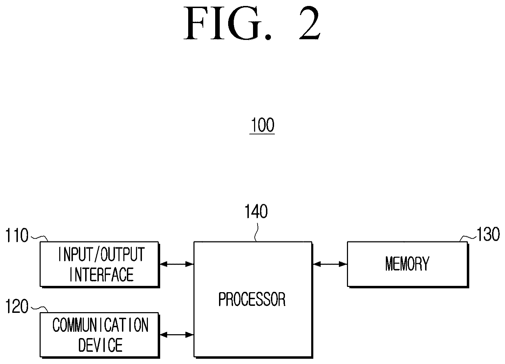

The electronic apparatus 100 receives image content by wire and transmits the image content wirelessly. For example, the electronic apparatus 100 may receive uncompressed image content using the above-described interface method, separate data components within the input image content, compress the image data, and transmit data using a commercialized wireless communication method. The specific configuration and operation of this electronic apparatus 100 will be described below with reference to FIG. 2.

Here, the wireless communication method may be a wireless communication method with a high-speed transmission rate. The latest HDMI cable can transmit a 4K or 8K-resolution image, and for this purpose, support a transmission rate of 16 Gbps or more (or 48 Gbps).

Therefore, when using the wireless communication method that supports the above-described wired transmission rate, the above-described image content can be transmitted more easily. However, the currently widely used Wi-Fi method has a communication rate that is similar to the above-described transmission rate or is insufficient in some cases.

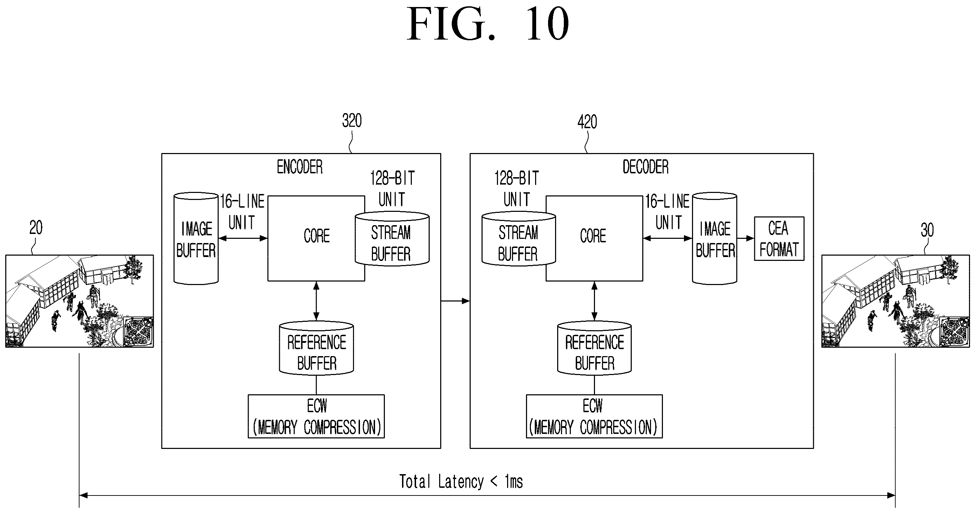

In this regard, the present disclosure uses an image compression technology to transmit the image content output using the above-described high-speed interface method even when using the currently used wireless communication method. Such image compression technology will be described below with reference to FIGs. 10 to 12.

In addition, as described above, since the above-described interface method transmits not only images but also audio signals and meta data, a data format required for transmission of the above-described image content and a method thereof will be described in detail below.

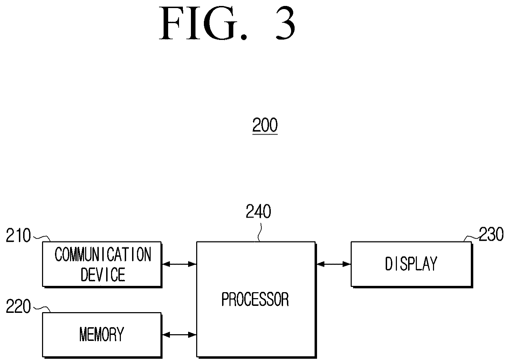

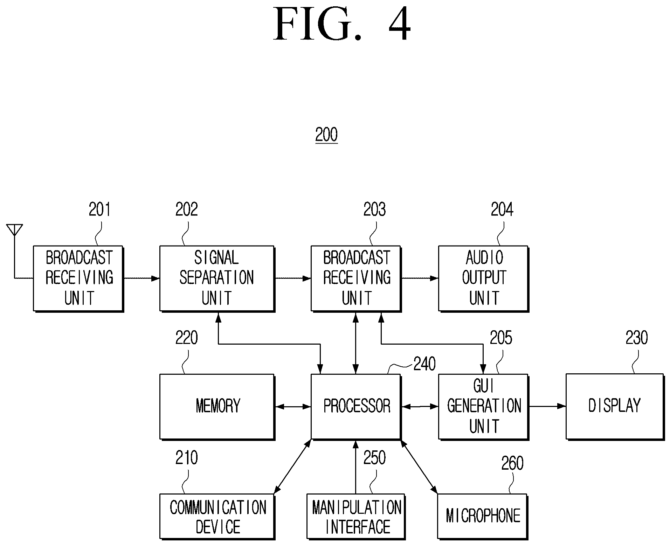

The display apparatus 200 may receive data transmitted wirelessly, restore image data, voice data, and meta data using the received data, and display an image using the restored image data. The specific configuration and operation of the display apparatus 200 will be described below with reference to FIGs. 3 and 4.

As described above, since a display system according to the present disclosure may wirelessly transmit the image content that is transmitted and received by wire, there is no need to use a wired cable. It is possible to improve the convenience of movement or aesthetics of the display apparatus. In addition, since the content is compressed and transmitted, the high-speed image data may be transmitted and received even using a wireless communication method that is currently commonly used.

Meanwhile, in the above, it is illustrated that the digital type image content is received and transmitted and received wirelessly, but when implemented, it is also possible to receive analog type content, convert the received analog type content into digital type content, and transmit the digital type content. In this case, the source device 10 (and/or the electronic apparatus 100) may support a video graphics array (VGA) port, an RGB port, a D-subminiature (D-SUB), etc.

FIG. 2 is a diagram of a configuration of the electronic apparatus according to one or more embodiments of the present disclosure.

Referring to FIG. 2, the electronic apparatus 100 may include an input/output interface 110, a communication interface (communication device 120), (at least one) memory 130, and (at least one) processor 140.

The input/output interface 110 receives uncompressed type digital image content. For example, the above-described input/output interface may be an interface of any one of a high definition multimedia interface (HDMI), a mobile high-definition link (MHL), a universal serial bus (USB), a display port (DP), Thunderbolt, a video graphics array (VGA) port, an RGB port, a D-subminiature (D-SUB), and a digital visual interface (DVI).

The electronic apparatus 100 may include different types of input/output interfaces, and may receive the digital image content through one of the input/output interfaces and receive power for driving the electronic apparatus 100 through the other of the input/output interfaces. For example, the electronic apparatus 100 may receive the image content through the HDMI and receive power through the USB. Alternatively, the electronic apparatus 100 may receive the above-described image content and power together through one interface (e.g., HDMI).

The communication device 120 may transmit and receive data using a wireless method. Specifically, the communication device 120 is configured to connect to at least one external apparatus (e.g., display apparatus) or an Internet network, and may support the wireless method.

The communication device 120 may include a Wi-Fi module, a Bluetooth module, a wireless communication module, etc. Here, each communication module may be implemented in the form of at least one hardware chip.

The Wi-Fi module and the Bluetooth module perform communication in a Wi-Fi method and a Bluetooth method, respectively. In the case of using the Wi-Fi module or the Bluetooth module, various connection information such as a service set identifier (SSID), a session key, and the like, is first transmitted and received, communication is connected using the connection information, and various information may then be transmitted and received.

The wireless communication module may include at least one communication chip performing communication according to various wireless communication standards such as, 3rd generation (3G), 3rd generation partnership project (3GPP), long term evolution (LTE), LTE advanced (LTE-A), 4th generation (4G), 5th generation (5G), and the like, in addition to the communication method described above.

In addition, the communication device 120 may include an infrared communication module, etc., and may receive control commands for the electronic apparatus 100 through the above-described infrared communication module, Wi-Fi module, Bluetooth module, etc. For example, operations such as stopping transmission of an image, starting transmission of an image, and selecting a display apparatus to transmit the image may be received. Meanwhile, when implemented, the above-described control command may be received through an input device included in the electronic apparatus 100.

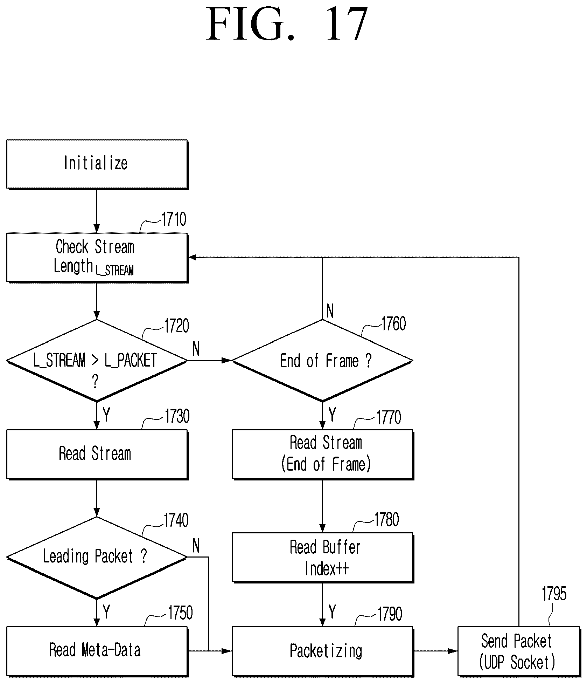

The communication device 120 may transmit a network packet generated by a process described below using a preset wireless transmission protocol. This will be described below with reference to FIG. 17.

The memory 130 may store the received image content. In addition, the memory 130 may store compressed image information, transmission packets, etc., as well as image information, voice information, and meta information temporarily generated in the process described below.

The memory 130 may be implemented in a form of a memory embedded in the electronic apparatus 100 or a form of a memory detachable from the electronic apparatus 100, depending on a data storage purpose. For example, data for driving the electronic apparatus 100 may be stored in the memory embedded in the electronic apparatus 100, and data for an extension function of the electronic apparatus 100 may be stored in the memory detachable from the electronic apparatus 100.

Meanwhile, the memory embedded in the electronic apparatus 100 may be implemented in at least one of, for example, a volatile memory (for example, a dynamic random access memory (DRAM), a static RAM (SRAM), a synchronous dynamic RAM (SDRAM), or the like), a non-volatile memory (for example, a one time programmable read only memory (OTPROM), a programmable ROM (PROM), an erasable and programmable ROM (EPROM), an electrically erasable and programmable ROM (EEPROM), a mask ROM, a flash ROM, a flash memory (for example, a NAND flash, a NOR flash, or the like), a hard drive, and a solid state drive (SSD)).

In addition, the memory detachable from the electronic apparatus 100 may be implemented in the form of the memory card (e.g., compact flash (CF), secure digital (SD), micro secure digital (Micro-SD), mini secure digital (Mini-SD), extreme digital (xD), multimedia card (MMC), etc.), external memory (e.g., USB memory) connectable to a USB port, and the like.

The memory 130 may include various instructions necessary for the operation of the processor 140. Here, the instructions may include instructions related to controlling the entire operation of the electronic apparatus 100 according to a user's control command, instructions to separate the received image content depending on a data type, instructions to compress the image data, instructions to packetize data according to the wireless transmission method, etc.

The processor 140 may control the overall operation of the electronic apparatus 100. Specifically, the processor 140 may be connected to each component (e.g., the input/output interface 110, the communication device 120, and the memory 130) of the electronic apparatus 100 to control the overall operation of the electronic apparatus 100.

The processor 140 may be implemented by a digital signal processor (DSP), a microprocessor, or a time controller (TCON) that processes a digital signal. However, the processor 140 is not limited thereto, and may include one or more of a central processing unit (CPU), a micro controller unit (MCU), a micro processing unit (MPU), a controller, an application processor (AP), a graphics-processing unit (GPU), a communication processor (CP), and an ARM processor, or may be defined by these terms. In addition, at least one processor 140 may be implemented by a system-on-chip (SoC) or a large scale integration (LSI) in which a processing algorithm is embedded, or may be implemented in a field programmable gate array (FPGA) form. In addition, at least one processor 140 may perform various functions by executing computer executable instructions stored in the memory. Meanwhile, at least one processor 140 may include a plurality of processors (for example, CPU + DSP).

The processor 140 may divide the received packet data corresponding to the received image content into one of image information, audio information, and meta information. For example, the processor 140 may separate data outside a preset section in the signal received from the input/output interface 110 into image information and confirm a packet type of a signal within the preset section to separate the meta information and the audio information.

The processor 140 may encode the separated image information. Specifically, the processor 140 may perform encoding in preset units of blocks using the video information in preset units of lines among the video information.

In this case, when the video information in the preset units of lines among the plurality of video information constituting one frame in the digital image content is buffered, the processor 140 may perform an encoding operation using the buffered video information in the preset units of lines.

Meanwhile, the processor 140 may determine whether to encode the frame in a P frame form or an I frame form for each of the preset units of frames. Such determination may be made in preset units of cycles. For example, a first frame may be an I frame, and the next two frames may be a repeating sequence of P frames.

When it is determined to encode the video information in the I frame form, the processor 140 may store information on the corresponding frame in the memory so that it may be used below in the encoding process of another P frame.

When it is determined to encode the video information in the form of the P frame, the processor 140 may perform the encoding operation using the video information in the preset units of lines and the frame information corresponding to the preset units of lines of the stored previous frame.

Meanwhile, the above-described encoding operation may be performed using a plurality of encoding cores. In this case, the processor 140 controls the plurality of encoding cores to perform encoding in preset units of blocks on a plurality of different lines.

In addition, during the above-described encoding operation, the processor may perform the encoding at a bit-rate based on complexity of the input video information during the process of performing the encoding in the preset units of blocks.

The processor 140 may generate a frame index based on a synchronization signal in the signal received from the input/output interface.

The processor 140 may add a header including a frame index to each of the encoded video information, audio information, and meta information and store the header in the memory. The memory may be divided into a plurality of storage areas, and each of the video information, audio information, and meta information may be stored in different storage areas.

The processor 140 generates packet data corresponding to the wireless method using the compressed image information, audio information, and meta information
For example, when the audio information includes an audio sample and a header corresponding to the audio sample, the processor 140 may merge the preset number of audio samples to generate an audio payload, generate a header corresponding to the audio payload using headers of each of the merged audio samples, and combine the audio payload and the header to generate a wireless audio packet.

In this case, the processor 140 may generate a header corresponding to the audio payload to include frame index information corresponding to a location of the audio information.

For the meta information, the processor 140 may merge separated meta information in units of frames to generate a meta payload, generate a meta header including frame index information corresponding to the meta information, and combine the meta header and the meta payload to generate a wireless meta packet.

The processor 140 may control the communication device 120 to transmit the generated packet data. First, the processor 140 preliminarily may generate packet data including one of encoded data, audio data, and meta data and classification information indicating a type of data included in the data area, and attach a header to the corresponding packet data to generate a network packet. The processor 140 may control the communication device 120 to transmit the generated packet data.

In this case, the processor 140 may control the communication device to transmit the packet data corresponding to the meta information among the packet data with the highest priority. In addition, the processor 140 may control the communication device 120 to transmit the audio information with the higher priority than the image information. That is, the processor 140 may perform the transmission operation with the priorities of meta information > audio information > video information.

As described above, since the electronic apparatus according to the present disclosure may wirelessly transmit the image content that is transmitted and received by wire, there is no need to use a wired cable. In addition, since the content is compressed and transmitted, the high-speed image data may be transmitted and received even using a wireless communication method that is currently commonly used.

FIG. 3 is a block diagram of the configuration of the display apparatus according to one or more embodiments of the present disclosure.

Referring to FIG. 3, the display apparatus 200 may include a communication interface (communication device 210), a memory 220, a display 230, and a processor 240.

The communication device 210 is configured to connect to at least one external apparatus (e.g., electronic apparatus 100) or an Internet network, and may be connected by the wireless method. The communication device 210 may receive the packet data corresponding to the image content from the external apparatus.

The communication device 210 may transmit and receive data using the wireless method. Specifically, the communication device 210 is configured to connect to at least one external apparatus (e.g., electronic apparatus) or an Internet network, and may support the wireless method.

The communication device 210 may include a Wi-Fi module, a Bluetooth module, a wireless communication module, etc. Here, each communication module may be implemented in the form of at least one hardware chip.

The Wi-Fi module and the Bluetooth module perform communication in a Wi-Fi method and a Bluetooth method, respectively. In the case of using the Wi-Fi module or the Bluetooth module, various connection information such as a service set identifier (SSID), a session key, and the like, is first transmitted and received, communication is connected using the connection information, and various information may then be transmitted and received.

The wireless communication module may include at least one communication chip performing communication according to various wireless communication standards such as, 3rd generation (3G), 3rd generation partnership project (3GPP), long term evolution (LTE), LTE advanced (LTE-A), 4th generation (4G), 5th generation (5G), and the like, in addition to the communication method described above.

In addition, the communication device 210 may include a wired communication module (e.g., LAN), an infrared communication module, etc. The communication device 210 may receive the control command for the display apparatus 200 from a user (or a remote control, a user terminal device) through the above-described infrared communication module, Wi-Fi module, Bluetooth module, etc. Meanwhile, when implemented, the above-described control command may be received through an input device included in the display apparatus 200.

The communication device 210 may receive network packets related to the image content using the wireless method. The network packets may be classified into a header area and a data area, and the data area may include one of the image information, the audio information, or the meta information. These network packets may be UDP packets.

The memory 220 may store data necessary for various embodiments. The memory 220 may be implemented in a form of a memory embedded in the display apparatus 200 or a form of a memory detachable from the display apparatus 200, depending on a data storage purpose.

For example, the data for driving the display apparatus 200 may be stored in the memory embedded in the display apparatus 200, and data for an extension function of the display apparatus 200 may be stored in the memory detachable from the display apparatus 200.

Meanwhile, the memory embedded in the display apparatus 200 may be implemented in at least one of, for example, a volatile memory (for example, a dynamic random access memory (DRAM), a static RAM (SRAM), a synchronous dynamic RAM (SDRAM), or the like), a non-volatile memory (for example, a one time programmable read only memory (OTPROM), a programmable ROM (PROM), an erasable and programmable ROM (EPROM), an electrically erasable and programmable ROM (EEPROM), a mask ROM, a flash ROM, a flash memory (for example, a NAND flash, a NOR flash, or the like), a hard drive, and a solid state drive (SSD)).

In addition, the memory detachable from the display apparatus 200 may be implemented in the form of the memory card (e.g., compact flash (CF), secure digital (SD), micro secure digital (Micro-SD), mini secure digital (Mini-SD), extreme digital (xD), multimedia card (MMC), etc.), external memory (e.g., USB memory) connectable to a USB port, and the like.

The memory 220 may include various instructions necessary for the operation of the processor 240. For example, the above-described instructions may store an instruction to control the general control operation of the display apparatus 200, an instruction to restore the image data, the voice data, and the meta data using the received data when receiving the content using the wireless method as in the present disclosure, an instruction to perform decoding using the received data in response to the image encoding method of the electronic apparatus 100, etc.

The memory 220 may store various types of content. Specifically, the data received through the communication device 210 may be stored, and the image data, the voice data, the meta data, etc., generated in a process described later may be stored.

The display 230 displays the image. This display 230 may be implemented as a liquid crystal display (LCD), light-emitting diode (LED), active matrix organic light-emitting diode (AMOLED), cathode-ray tube (CRT), or the like.

The processor 240 controls the overall operation of the display apparatus 200. Specifically, the processor 240 may be connected to each component (e.g., the communication device 210, the memory 220, and the display 230) of the display apparatus 200 to control the overall operation of the electronic apparatus 100.

The processor 240 may be implemented by a digital signal processor (DSP), a microprocessor, or a time controller (TCON) that processes a digital signal. However, the processor 240 is not limited thereto, and may include one or more of a central processing unit (CPU), a micro controller unit (MCU), a micro processing unit (MPU), a controller, an application processor (AP), a graphics-processing unit (GPU), a communication processor (CP), and an ARM processor, or may be defined by these terms. In addition, at least one processor 240 may be implemented by a system-on-chip (SoC) or a large scale integration (LSI) in which a processing algorithm is embedded, or may be implemented in a field programmable gate array (FPGA) form. In addition, at least one processor 240 may perform various functions by executing computer executable instructions stored in the memory. Meanwhile, at least one processor 240 may include a plurality of processors (for example, CPU + DSP).

When the processor 240 receives data through the communication device 210, the processor 240 may restore the image data, the voice data, and the meta data using the received data.

Specifically, the processor 240 may use the classification information in the received network packet to classify the information in the received network packet into the video data, the audio data, and the meta data. In addition, the processor 240 may store each classified data in a memory area corresponding to each data type.

In this case, the processor 240 may remove the classification information indicating the type of data in the header and data of the corresponding network packet from the received network packet and store the classification information in the memory.

When the image is compressed, the processor 240 may perform the decoding in the method corresponding to the compression method. Specifically, the processor 240 may perform the decoding in the preset units of blocks using the video data in the preset units of lines among the video data.

When the image compression method may use a P frame, the processor 240 may store the generated frame image in the memory as the previous frame image, and in the decoding process, perform the decoding using the image information corresponding to the video data in the preset units of lines and the video data of the previous frame.

In this case, the processor 240 may generate a synchronization signal for synchronization between the image and the meta data, and output the meta data corresponding to the frame image and the frame index of the frame image based on the generated synchronization signal.

The processor 240 may control the display 230 to display the generated image.

Although only the brief configuration of the display apparatus 200 has been described above, the display apparatus 200 may further include a configuration as illustrated in FIG. 4. The specific configuration of the display apparatus 200 will be described below with reference to FIG. 4.

FIG. 4 is a block diagram of the configuration of the display apparatus according to one or more embodiments of the present disclosure.

Referring to FIG. 4, the display apparatus 200 includes a broadcast receiving unit 201, a signal separation unit 202, an A/V processing unit 203, an audio output unit 204, a GUI generation unit 205, the communication device 210, the memory 220, the display 230, the processor 240, a manipulation interface 250, and a microphone 260.

The configuration of the communication device 210, the memory 220, the display 230, and the processor 240 in FIG. 4 is the same as those in FIG. 3, and therefore, redundant description thereof will be omitted and only the parts that differ from the above will be described additionally.

The broadcast receiving unit 201 receives broadcasting from broadcasting stations or satellites in a wired or wireless method, and demodulates the received broadcasting.

The signal separation unit 202 separates a broadcast signal into an image signal, an audio signal, and an additional information signal. Meanwhile, in FIG. 3, the processor 240 is illustrated and described as separating the data received through the wireless communication into the image signal, the audio signal, and the additional information signal, but when implemented, the above-described signal separation unit 202 may perform the above-described operation, and when implemented, two signal separation units may exist in the display apparatus 200. For example, one signal separation unit may separate various signals from a broadcast signal, and the other signal separation unit may separate the image data, the audio data, and the meta data from the data received through the wireless communication.

The signal separation unit 202 transmits the image signal and the audio signal to the A/V processing unit 203.

The A/V processing unit 203 performs signal processing such as video decoding, video scaling, and audio decoding on the image signal and the audio signal transmitted from the broadcast receiving unit 201, the communication device 210, and the memory 220. Specifically, the audio data and the video data received through the communication device described above and restored as the video data may be input to the A/V processing unit 203. Meanwhile, although it has been described above that the processor 240 performs the decoding on the received data, when implemented, the above-described A/V processing unit 203 may perform the decoding. In addition, in the above, the A/V processing unit 203 is illustrated and described as being a separate component from the processor 240, but when implemented, may be some module or processor cores within the processor 140.

The A/V processing unit 203 outputs the image signal to the GUI generation unit 205 and outputs the audio signal to the audio output unit 204.

Meanwhile, when storing the received image and audio signals in the memory 220, the A/V processing unit 203 may output the image and audio to the memory 220 in the compressed form.

The audio output unit 204 converts the audio signal output from the A/V processing unit 203 into sound and outputs the converted sound through a speaker, or outputs the converted sound to external devices (for example, an external speaker, a sound bar) connected through an external output terminal.

The GUI generation unit 205 generates a graphic user interface (GUI) that is provided to a user. Here, the GUI may include at least one of channel information currently being output, source information (e.g., information indicating whether the content is a broadcast signal, received through the wireless communication, or received through a wired interface), and volume information.

The GUI generation unit 205 may add the generated GUI to the image output from the A/V processing unit 203. The GUI generation unit 205 provides the image to which the GUI is added to a display 160.

The manipulation interface 250 is implemented by a touch screen, a touch pad, a key button, a keypad, or the like, to provide a user manipulation of the display apparatus 200. The manipulation interface 250 may be provided in the display apparatus 200 and may receive user manipulation from an external remote control.

The microphone 260 may receive the user's voice when activated. For example, the microphone 260 may be formed integrally with the display apparatus 200 in upper, front, side directions, or the like. The microphone 260 may include various components such as a microphone collecting the user's voice in the analog form, an amplifier circuit amplifying the collected user's voice, an A/D conversion circuit sampling the amplified user's voice and converting the sampled amplified user's voice into a digital signal, and a filter circuit removing noise components from the converted digital signal.

When the user's voice is input through the microphone 260, the processor 240 may confirm the content of the user's voice and perform an operation corresponding to voice contents. Meanwhile, although it has been described above that the user's voice is input through the microphone 260, the microphone may be provided in a remote control for controlling the display apparatus 200, and the user's voice input through the microphone provided in the remote control may be input and processed through the communication device 210 described above.

In addition, the electronic apparatus 100 may not only operate based on the components provided in the display apparatus 200 or the remote control, but may also operate based on control commands from the user terminal device. Such an application may provide a function that allows the user terminal device to be used as a remote control for the corresponding electronic apparatus.

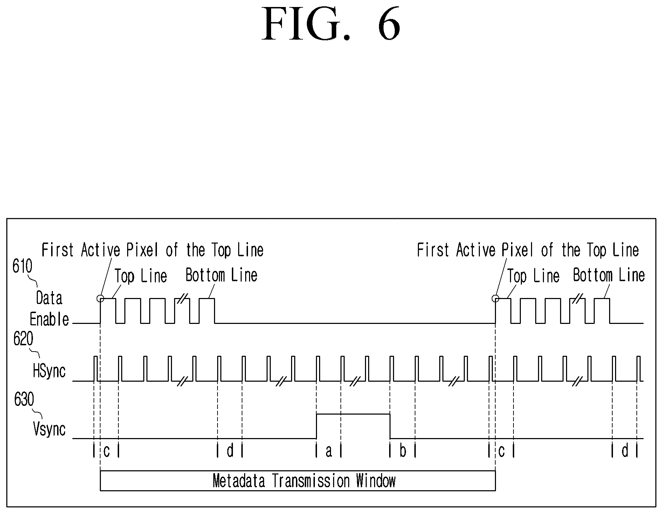

FIG. 5 is a timing diagram of an HDMI signal, and FIG. 6 is a diagram of an example of the arrangement of the meta data in then HDMI signal.

Referring to FIGs. 5 and 6, the HDMI signal is transmitted as a video signal (or video packet) in a video data period. Specifically, the video data includes information on video pixels, and 8-bit video data may be converted to 10 bits and transmitted.

In Data Island Period, the audio signal and the meta data are transmitted in the form of the HDMI packet. The audio signal, the meta data, etc., are transmitted in the form of the packet and encoded using a TERC4 coding method, so that 4-bit data may be converted into 10 bits and transmitted. In addition, InfoFrames may be transmitted in the data island.

Here, the InfoFrames is information that information such as supplier-specific information, auxiliary video information (e.g., chroma sampling, resolution, 3D format, etc.), source product description (e.g., name of video source, product type), audio (e.g., sampling rate, the number of channels, encoding format, speaker mapping, etc.), a MPEG source (e.g., bit rate, frame type), or a NTSC VBI (meta data such as subtitles) is transmitted.

The control period is a section in which control information (e.g., preamble, HYNC, VSYNC) is transmitted.

Referring to FIG. 6, it may be confirmed that a data signal 610 is digitally transmitted in response to trigger signals of a horizontal synchronization signal (HSYNC) 620 and a vertical synchronization signal (VSYNC) 630.

In addition, the HDMI signal includes a vertical blanking period and a horizontal blanking period, and the active video data is transmitted as information illustrated in FIG. 5 at a vertical synchronization signal point in time and a horizontal synchronization point in time.

The HDMI operating with these specifications supports a transmission rate of 18 Gbps for 4K video transmission in version 2.0, and supports a transmission rate of 48 Gbps in HDMI 2.1 version.

However, Wi-Fi supports a throughput of 3.5Gbps in Wi-Fi 5 and a throughput of up to 9.6Gbps in Wi-Fi6. Since Wi-Fi 4, which is currently used in real life, has a lower speed than the above-described throughput, there are limitations to transmitting HDMI signals as it is through Wi-Fi in terms of specifications.

Accordingly, the present disclosure supports the transmission of the HDMI signals even using a commonly used wireless communication method by reducing the size of data to be transmitted through the encoding of the image data described above. In addition, since the HDMI transmits and receives not only the images but also the audio signal and meta data through a single cable and requires appropriate transmission and synchronization of not only the image data but also the above-mentioned audio signal and meta data, the corresponding operations are described below.

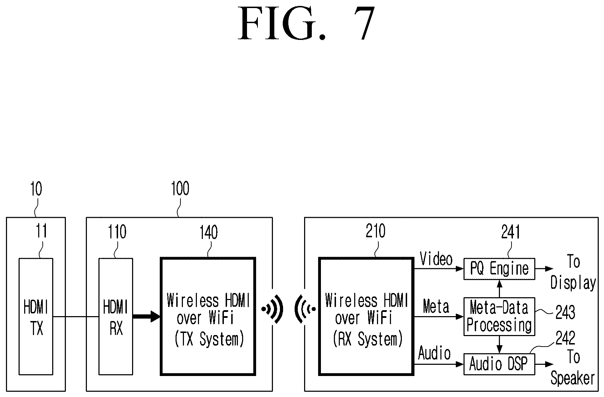

FIG. 7 is a diagram of a method of wirelessly transmitting an HDMI signal according to one or more embodiments of the present disclosure.

Referring to FIG. 7, a display system 1000 may include a source device 10, an electronic apparatus 100, and a display apparatus 200.

The source device 10 may output image content through an HDMI port. In this case, the source device 10 may output the HDMI signal in a manner that meets the HDMI specifications, that is, in the form illustrated in FIG. 5.

The electronic apparatus 100 may be connected to a HDMI port 11 of the source device 10 and may receive the image content through an input/output interface 110 corresponding to the HDMI port 11. Hereinafter, for ease of description, it is expressed as receiving the image content. However, since the HDMI method outputs the HDMI signal in a streaming method, the HDMI method continuously receives the HDMI signal for the image content instead of receiving the entire content.

Meanwhile, in the illustrated example, the electronic apparatus 100 is illustrated as being directly connected to the HDMI port of the source device 10, but when implemented, may be connected through the HDMI cable. In addition, although the source device 10 and the electronic apparatus 100 are illustrated and described as separate devices, the electronic apparatus 100 may be implemented as built into the source device 10 when implemented.

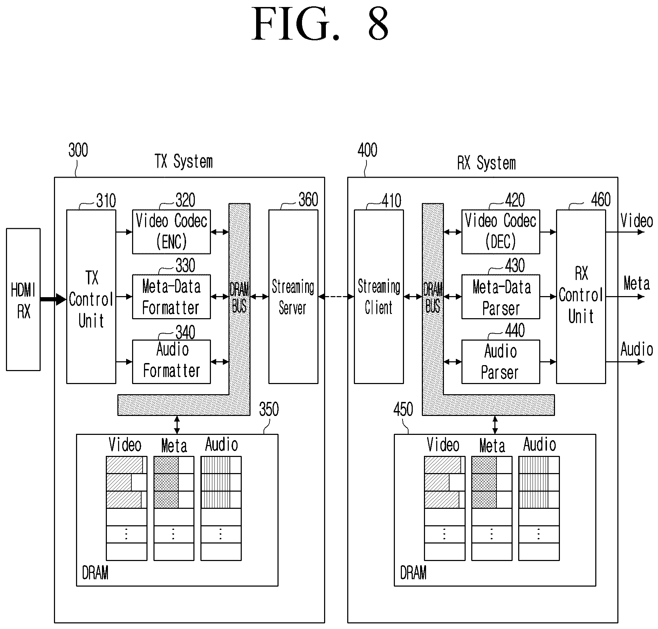

The electronic apparatus 100 may separate the image data, the voice data, and the meta data from the received HDMI signal, perform the encoding on the image data, packetize the encoded image data, the voice data, and the meta data, and wirelessly transmits the packet data. Detailed operations and configurations for performing the above-described operations will be described below in FIG. 8.

The display apparatus 200 may receive data (or packet) transmitted by the wireless method and restore the image data, the audio data, and the meta data using the received data.

The display apparatus 200 may provide image data to an image processing device 241 that processes the image, the meta data to a processing device 243 that processes the meta data, and audio data to an audio processing device 242 that processes the audio data. The detailed operation and configuration of the display apparatus 200 that performs the above-described operations will be described later with reference to FIG. 8.

FIG. 8 is a diagram of a system for wirelessly transmitting a video according to one or more embodiments of the present disclosure.

Referring to FIG. 8, a wireless transmission system may include a transmitting device 300 and a receiving device 400.

The transmitting device 300 may receive image content in a wired method and wirelessly transmit data on the image content. The transmitting device 300 may be the electronic apparatus 100 described above.

The transmitting device 300 may include a transmission control module 310, a video encoder 320, a meta data processing module 330, an audio processing module 340, a transmission memory 350, and a wireless transmission module 360.

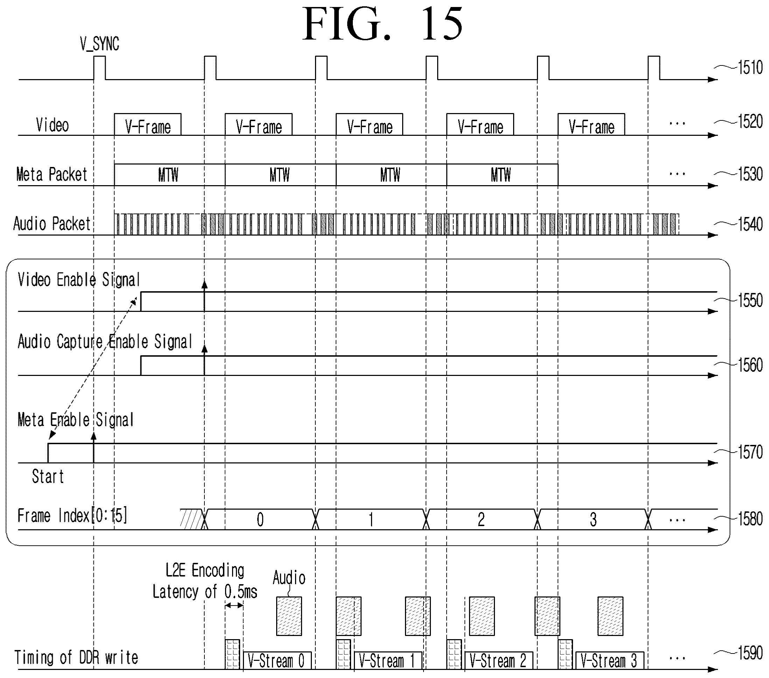

The transmission control module 310 may generate a control signal for synchronization. For example, the transmission control module may generate control signals such as a meta enable signal, a video enable signal, a video enable signal, and a frame index. The operation of generating such a control signal will be described below with reference to FIG. 15.

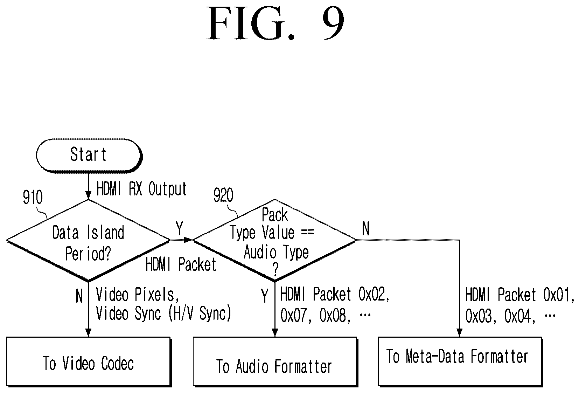

The transmission control module 310 may classify the video signal (or video information, video packet), the audio signal (or audio information, audio packet), and the meta signal (or audio information, audio packet). This classification operation will be described in detail in FIG. 9.

The transmission control module 310 may provide the classified video signal to the video encoder 320, the audio signal to the audio processing module 340, and the meta signal to the meta data processing module 330.

The video encoder 320 may receive the video signal from the transmission control module 310 and encode the received video signal. The video encoder 320 may insert a control signal into a stream header. The specific operation of the video encoder 320 will be described later with reference to FIGs. 10 to 12. The video encoder may be referred to as codec, a video compressor, a video compression module, a compression module, a codec module, etc.

The meta data processing module 330 may convert the meta signal from the transmission control module 310 into a new format. For example, the meta data processing module 330 may collect and rearrange HDMI packets related to a plurality of meta data within the corresponding frame in a video frame unit to form one packet. Here, the rearrangement may be made by removing only an ECC part of the 36-byte size HDMI packet to form a 32-byte size.

The meta data is not always transmitted for every video frame. Accordingly, the meta data processing module 330 may insert a field indicating whether each rearranged data is valid data in a reserve area of a header of the generated wireless meta packet. In addition, the meta data processing module 330 may add index information to specify a location where the corresponding meta data is collected to the header of the wireless meta packet.

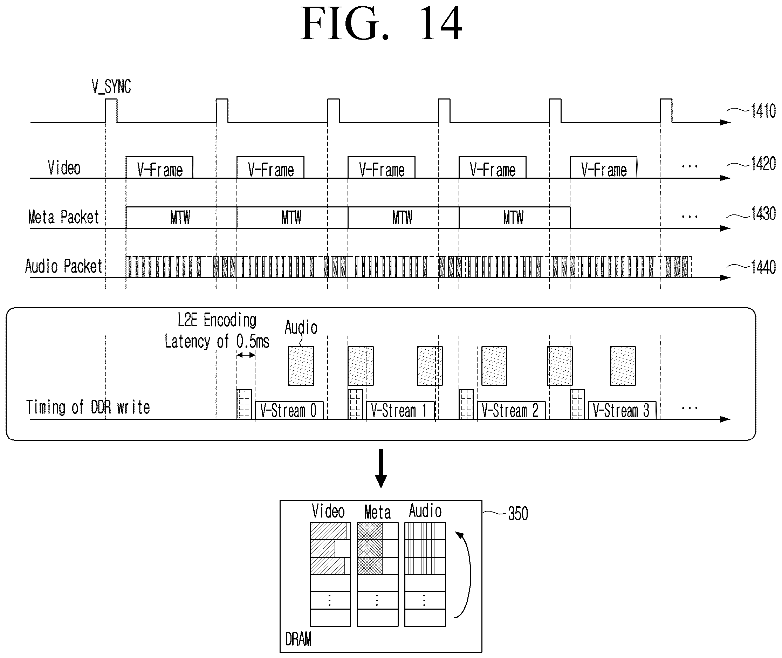

The operation of the meta data processing module 330 is described in detail in FIG. 14.

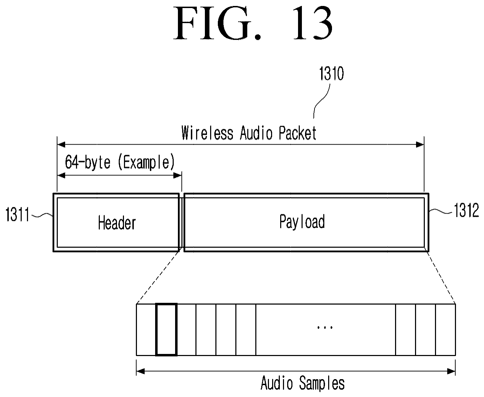

The audio processing module 340 may receive the audio signal from the transmission control module 310 and perform processing to convert the received audio signal into a new format. The specific operation of the audio processing module 340 will be described later with reference to FIG. 13.

The transmission memory 350 may store the video data, the audio data, and the meta data processed by the video encoder 320, the meta data processing module 330, and the audio processing module 340, respectively. In this case, the transmission memory 350 may have a plurality of storage spaces. In this case, the storage space may be a space for storing the video data, a space for storing the audio data, or a space for storing the meta data.

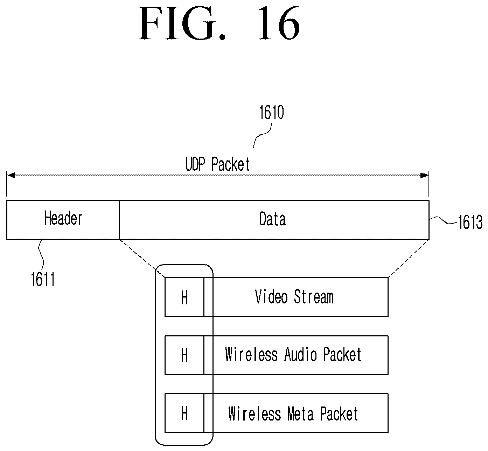

The wireless transmission module 360 may access each memory space, read data, convert the read data into network packets, and transmit the data using the wireless communication method. The specific operation of the wireless transmission module 360 will be described below with reference to FIGs. 16 and 17.

The receiving device 400 may receive data using the wireless method and restore the image data, the voice data, and the meta data using the received data. The receiving device 400 may be the display apparatus 200 described above.

The receiving device 400 may include a reception module 410, a video decoder 420, a meta data processing module 430, an audio processing module 440, a reception memory 450, and a reception control module 460.

The reception module 410 may classify the received network packets and store the data in each video/audio/meta area of the reception memory 450. Specifically, the reception module 410 may confirm a classification field indicating the type of data included in the data in the data area of the received network packet and use the confirmed classification field to identify whether the data is the video data, the audio data, or the meta data. When such identification is completed, the reception module may store the video data in the video area of reception memory 450, the audio data in the audio area of reception memory 450, and the meta data in the meta area of the reception memory 450.

Here, the network packet may be the UDP packet described in FIG. 16, but is not limited thereto and may also be a TCP packet, etc. In addition, the corresponding network packet may also be referred to as a wireless packet, a Wi-Fi packet, etc.

The video decoder 420 may read the video data area of the reception memory 450, decode the codec, generate the video synchronization signal, and parse the control signals for synchronization. The operation of the video decoder will be described below with reference to FIGs. 10 to 12. This video decoder 420 may be referred to as an image decoder, a pixel decoder, a codec, a codec module, a decoding module, etc.

The meta data processing module 430 may read the meta data area of the reception memory 450, parse the header information and meta data from the wireless meta packets stored in the meta data area, and provide the parsed meta data to the configuration that requires the meta data.

The audio processing module 440 may read the audio data area of the reception memory 450, parse the header information and audio sample in the audio packet, and provide the audio sample to a component (e.g., audio DSP) that processes the audio samples.

The reception memory 450 stores each video/audio/meta data in a separate memory space.

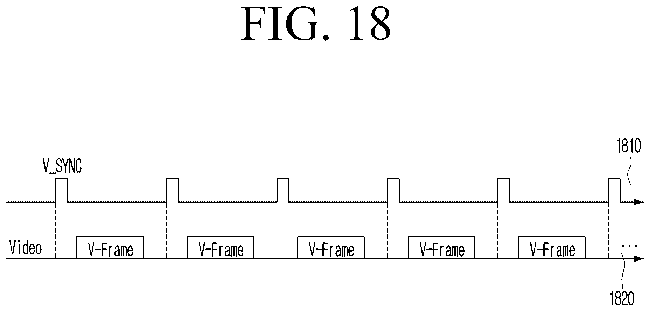

The reception control module 460 may perform video/audio/meta synchronization using the control signal in each processing unit based on the synchronization signal generated in the video processing unit. The operation of the reception control module 460 will be described below with reference to FIG. 18.

Meanwhile, the receiving device 400 may not include a display, but may be implemented in a dongle form and provide the wirelessly received data to the display apparatus by wire. In this case, the receiving device may be connected to a HDMI terminal of the display apparatus and may convert the restored signals into the HDMI signal form and provide the HDMI signal, or may be connected to the USB terminal and provide the above-described data to the display apparatus as it is.

FIG. 9 is a diagram illustrating a method of processing each HDMI signal attribute according to one or more embodiments of the present disclosure.

The HDMI is a standard generated based on the premise of a wired cable, and requires a function of classifying, processing, and storing the wired data signals received in real time through the cable in order to transmit HDMI RX output signals wirelessly.

To this end, in this disclosure, video signals (and sync signals) and HDMI Packets are classified based on the period of the HDMI specification, and the HDMI packet may classify the audio signal and the meta signal by referring to a packet type value.

Specifically, referring to FIG. 9, first, it may be determined whether the current section is the Data Island Period (S910). Specifically, as previously described in Fig. 5, the current signal is not in the Data Island Period section, and the signal in the corresponding section is a sync signal or image signal, so the corresponding signals may be transmitted to the video decoder 420.

When the current section is the Data Island Period, the packet type of the received signal is confirmed (S920), and when the packet type corresponds to the audio signal, the corresponding signal may be transmitted to the audio processing module 340, or otherwise, may be transmitted to the meta data processing module 330. For example, according to the HDMI specification, packet types with values of 0x02, ox07, Ox08, Ox09, Ox0B, Ox0C, Ox0E, and OxOF are related to the audio data, and signals with the corresponding packet type values may be transmitted to the audio processing module 340, and the remaining signals may be transmitted to the meta data processing module 330.

FIG. 10 is a diagram of an image encoding operation according to one or more embodiments of the present disclosure.

Referring to FIG. 10, the video encoder 320 is located on the transmitting device side, and the video decoder 420 is shown on the receiving device side.

The video encoder 320 may include an image buffer, a reference buffer, a stream buffer, and an encoding core.

This video encoder 320 may receive a video pixel (i.e., video signal), a video sync (horizontal synchronization signal, vertical synchronization signal) in the HDMI signal, a video enable signal, and a frame index signal from the transmission control module 310.

The image buffer stores a high-bandwidth HDMI video input signal 20 in the image buffer.

The reference buffer stores the previous frame. The reference buffer may be implemented in DRAM. Specifically, the reference buffer is for generating a P frame, which will be described later, and when the encoding algorithm does not use the P frame, the reference buffer may be omitted.

When the video enable signal has a high value and the vertical synchronization signal is triggered, the encoding core may perform an encoding operation using data stored in the image buffer.

In this case, the encoding core may perform the encoding operation immediately after buffering only a few lines among the HDMI signals scanned in a line unit. For example, when the encoding processing unit of the video encoder 320 is a 16*16 block, only 16 lines are buffered, and when 16 lines are buffered, the encoding operation may be performed.

The existing encoder may perform the encoding while buffering the image in frame units, but in the present disclosure, instead of waiting for the image to be stored in frame units, perform the encoding operation immediately when units of lines required for the encoding are buffered, thereby minimizing latency that may occur due to the image compression.

In addition, the encoding core may use the information of the previous frame during the above-described encoding operation to ensure that the generated encoded data has the P frame form. Specifically, as an example of the encoding method, there is a method that uses the P frame. The method is a technology that compresses images by generating the P frame with only information corresponding to the difference from the corresponding frame (or the previous frame), based on a key frame (i.e., I frame) including pixel information of all frames.

Accordingly, the encoding core may perform encoding by periodically generating the I frame with all the pixel information in the frame, and then generating the P frame after generating the I frame.

The video encoder 320 may classify the encoded results in units of frames and store the encoded results in a transmission memory. In this case, the video encoder 320 may insert the frame index corresponding to the received frame index signal into the frame header.

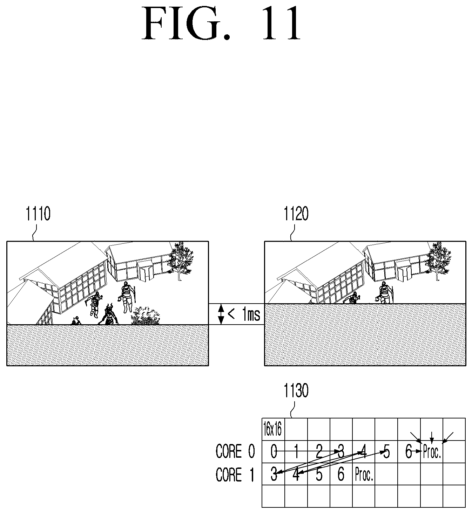

Meanwhile, although the single encoding core is illustrated in the illustrated example, in order to achieve a faster encoding operation when implemented, the above-described encoding cores may be composed in plurality. For example, four encoding cores may be used, and when each encoding core performs the encoding operation in units of 16*16 pixels, the four encoding cores may perform individual encoding operations using 64 lines of image data when 64 lines of images are stored in the image buffer. In this case, the encoding operations between the plurality of encoding cores will be described below with reference to FIG. 11.

The encoding core may store the encoded result in a stream buffer. In this case, the encoding core may add a frame index corresponding to the current frame to the encoded results to generate a wireless video packet, and store the generated wireless video packet in the transmission memory.

The video decoder 420 may include the stream buffer, the reference buffer, the image buffer, the stream buffer, and a decoding core.

The stream buffer may store the wireless packet. This stream buffer may be the reception memory described above.

The decoding core may perform decoding using the video data stored in the stream buffer. In this case, the video core may perform decoding using image data of a previous frame stored in the reference buffer. The operation of the decoding core may be operated in a method corresponding to the encoding core described above. That is, the decoding core may perform a decoding operation in units of a plurality of line pixels.

The image decoded by the decoding core may be stored in the image buffer and may be output in units of frames.

Meanwhile, the video decoder 420 may generate the sync signal using the received video data for synchronization with the meta data or audio data, and output decoded results 30 between the generated sync signals. In addition, the meta data may also be transmitted to the necessary configuration on the receiving device side in accordance with the sync signal described above.

FIG. 11 is a diagram of a line buffering operation according to one or more embodiments of the present disclosure.

Referring to FIG. 11, the plurality of encoding cores may perform the image encoding in the preset units of lines. For example, when one encoding core performs an encoding operation in units of 16*16 pixels, four encoding cores may perform an encoding operation in units of 64 lines.

Therefore, when the image of 64 lines is buffered through the HDMI signal, the encoding core may immediately perform the encoding operation.

When the image encoding of the corresponding 64 lines is completed, the image encoding operation for next 64 lines may be performed.

When performed in this way, by comparing an encoder input image 1110 and a decoder output image 1120, it can be seen that a width difference of approximately 64 lines occurs between two images within a 1 ms time range.

In this way, since the present disclosure performs the encoding and transmission operations in units of lines, a low-latency operation may be achieved.

The plurality of encoding cores may perform the encoding operation in the order shown in an image 1130. In other words, the plurality of encoding cores does not perform the encoding operation at the same point in time, but the first encoding core may sequentially perform the encoding operation in units of 16 pixels from left to right, and the next encoding core may perform the operation of the encoding core that operates previously and then may perform the encoding operation from a preset point in time (for example, 3 illustrated). Although only two cores are illustrated in the illustrated example, the above-described method may be applied even in the case of four cores, and the above-described operation may be applied in units of two cores.

Meanwhile, in the illustrated example, the encoding operation is illustrated and described as being performed from top to bottom of the image and from left to right. However, the operation is that the image data of the HDMI signal is transmitted as pixel data in the order (or scan method) described above. Accordingly, when the pixel transmission order of the HDMI signal is different from the above-described case, it may be operated corresponding to the changed order.

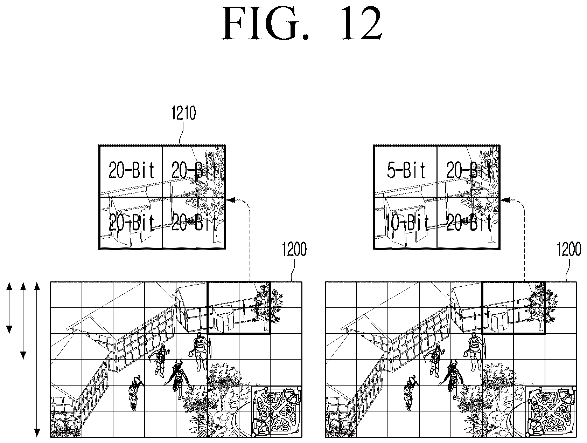

FIG. 12 is a diagram of a bit rate operation according to one or more embodiments of the present disclosure.

Referring to FIG. 12, as described above, image data 1200 is an image processed in preset units of pixels (for example, 16*16).

Meanwhile, in order to compress each frame at a uniform bit rate, it is necessary to control a bit rate of a preset value or less in units of frames.

In addition, as described above, the operation of the present application is not performed with the entire frame loaded, but is performed immediately after the buffer of the preset number of line data, so in each compression process, the following two methods may be applied.

First, a method is used to control all blocks to be compressed with the same bits by allocating uniform bits to each block (1210). Although this operation has simple computational complexity, there is a possibility that the deterioration in images may occur in certain areas.

Second, for each block, high bits are allocated to areas with high image complexity, and low bits are allocated to areas with low image complexity. In this case, the cores may perform the above-described operation by considering the bit allocation and remaining budget in previous blocks during the encoding process.

For example, by setting an average bit rate to 5 bits or 10 bits, the encoding is performed on an area in which an average bit rate is set to 15 bits and low image complexity is low, so it is possible to secure a free situation and perform encoding at a high bit rate based on the free situation secured in an area with high image complexity. Conversely, when the high bit rate is used for areas of high image complexity early in the line, based on the high bit rate used later in the image or later in the line, even for an area with normal image complexity, the average bit rate may be achieved by encoding the image at a low bit rate.

FIG. 13 is a diagram of an operation of processing audio data according to one or more embodiments of the present disclosure. Specifically, FIG. 13 is a diagram for explaining the operation of the audio processing module 340 of FIG. 8.

The audio processing module 340 may generate a wireless audio packet for transmitting audio data.

A wireless audio packet may include a header 1311 and a payload 1312.

The payload 1312 is a collection of the preset number of audio packets (i.e., audio samples) among HDMI packets, and the header of the corresponding audio packet may be removed.

The header 1311 is a merge of the headers of each audio sample constituting the payload, and may include the header information of the above-described audio sample and the frame index indicating the frame position in which the corresponding audio packet is received. For example, the above-described frame index may be located in the reserved area of the header 1311.

In this way, the wireless audio packet generated by the audio processing module 340 may be stored in the transmission memory 350.

The size of such payload is shown in Table 1.

**[Table 1]**

| Sampling Rate(Hz) | # of per-channel audio samples in Wireless Audio Packet | Example of Payload Size in Byte | |
|---|---|---|---|
| | | 2CH | 8CH |
| 32K-48K | 512 | 2048 | 8192 |
| 48K-96K | 1024 | 4096 | 16384 |
| 96K-192K | 2048 | 8192 | 32768 |
| 192K-384K | 4096 | 16384 | 65536 |
| 384K-768K | 8192 | 32768 | 131072 |
| 768K-1536K | 16384 | 655536 | 262144 |

The wireless audio packet generated as described above includes frame index information corresponding to the positions of the samples in the header, so the receiving side may easily synchronize the received wireless audio packets.

FIG. 14 is a diagram of a configuration of a transmission memory according to one or more embodiments of the present disclosure.

Referring to FIG. 14, the transmission memory 350 may store wireless video packets, a wireless audio packet, and a wireless meta packets in separate spaces, and may have a memory area with a pre-allocated address for each packet type.

Accordingly, the video encoder 320, the meta data processing module 330, and the audio processing module 340 each know a plurality of address areas of the transmission memory 350 that they use, and use the plurality of address areas one by one sequentially.

In this case, the video encoder 320 may perform a writing operation in units of frames, the audio processing module 340 may perform a writing operation in units of wireless audio meta packets, and the meta data processing module 330 may perform a writing operation in units of wireless meta packets (or units of frames).

In addition, the reception memory 450 may also have a structure similar to the transmission memory. That is, the reception module 410 described above may identify the type of wireless packet through the header of the received packet and store the received packets in different areas for each identified type. For example, the header of the received packet includes information indicating video, and the received wireless packet may be stored in the video area of the reception memory 450.

FIG. 15 is a diagram of an operation of generating a control signal according to the present disclosure.

Referring to FIG. 15, the arrangement of a synchronization signal 1510 in the HDMI signal and various data 1520, 1530, and 1540 in the HDMI signal is illustrated.

Since the HDMI signal transmits and receives data in the form described above, there is no separate synchronization signal for synchronization of each data. However, to support HDMI 2.1 specifications such as HDR and VRR, the meta data requires timing and alignment of video frames.

Although the video data and audio data have different processing units, the synchronization is required to match a starting point. In other words, a control signal (or synchronization signal) for video and audio synchronization tracking is required.

Accordingly, in the present disclosure, the control signal for synchronization is generated for the above-described reasons. Specifically, as illustrated, the control signal of the present disclosure includes four control signals such as a video enable signal 1550, an audio enable signal 1560, a meta enable signal 1570, and a frame index signal 1580.

The video enable signal 1550 may have a high value after the meta enable signal 1570 becomes high and after the first vertical synchronization is triggered. Accordingly, the video decoder 420 described above has a video enable signal with a high value and may perform an encoding operation according to the subsequent vertical synchronization signal.

The audio enable signal 1560 may have a high value after the meta enable signal 1570 becomes a high value and after the first vertical synchronization is triggered. Accordingly, the audio processing module 440 described above may have the audio enable signal with a high value and perform the audio signal processing operation according to the subsequent vertical synchronization signal.

The meta enable signal 1570 is a signal for controlling the operation of the meta data processing module 430, and may have a high value when a random start signal is triggered. In the state where the meta enable signal becomes high, when the first vertical synchronization signal is triggered, the meta data processing module 430 may perform the meta data processing operation.

When the video enable signal and/or the audio enable signal have a high value, the frame index signal 1580 may output a value sequentially increased by 1 according to the trigger of the vertical synchronization signal.

In the above, it is described that the meta enable signal is triggered first. Since in the HDMI specification, the meta data outputs the value corresponding to the next frame, that is, since the audio signal and video signal between the vertical synchronization signals are information from the same point in time, when the meta data is data from the next point in time, the meta enable signal is triggered first.

When four control signals are generated like this, each component of the transmitting device may store the data processed by each component in the memory (1590).

Meanwhile, in order to operate the above-described operation in response to the transmission rate of the HDMI, the low-latency processing is required. In other words, the processing of the video, audio, and meta data described above needs to be performed within the frame unit of the HDMI output image.

To this end, the processing latency of each component needs to be within 1 ms, and processing should be made to uniform latency (e.g., 1 ms) and bit rate (e.g., uniform compressed stream size for each frame) within each frame unit, so the low-latency transmission may synchronize video and audio meta in units of frames of the image.

FIG. 16 is a diagram of an example of a transmission packet according to one or more embodiments of the present disclosure.

Referring to FIG. 16, a transmission packet 1610 includes a transmission header 1611 and transmission data 1613.

The transmission header 1611 may include transmission port information and reception port information.

The transmission data 1613 may include one of a plurality of wireless packets stored in the transmission memory. For example, one of the wireless video packet, the wireless audio packet, and the wireless meta packet may be included in the above-described data. As described above, the wireless packets may be added with a classification field H, indicating the type of each packet (i.e., whether it is a video packet, an audio packet, etc.).

Meanwhile, in the illustrated example, an example of data transmission using user datagram protocol (UDP) has been described, but other protocols such as TCP may be used in addition to the above-described protocol when implemented.

FIG. 17 is a diagram of a packet transmission operation according to one or more embodiments of the present disclosure.

Referring to FIG. 17, first, the size of the stream to be transmitted is confirmed (S1710). Specifically, the number of image data, audio data, and meta data that constitutes one frame may be confirmed.

The number of streams to be transmitted and the number of transmitted streams are confirmed (S1720). Specifically, it is possible to confirm whether the transmission of data belonging to the corresponding frame has been completed.

When the transmission has not been completed (S1720-Y), the data stored in the transmission memory is read (S1730) and it is confirmed whether the transmission has started in the current frame (S1740).

When it is the current transmission start point in time (S1740-Y), the meta data may be read first (S1750) and packetized (S1790), and the transmission may be performed (S1795).

Meanwhile, in the present disclosure, the packetization is processed twice. First, the packetization is performed for each data rectification, and the video packet, the audio packet, and the meta packet may be generated through this process.

Another packetization is packetization for wireless transmission (or UDP packetization). Specifically, as illustrated in FIG. 16, it is packetization that adds classification information and a UDP packet header to identify the type of the packet to the video packet, the audio packet, and the meta packet described above. The packet generated by such packetization may be referred to as the wireless audio packet, the wireless video packet, and the wireless meta packet.

Meanwhile, in FIG. 17, the above-described packet processing is illustrated and described as being divided into two operations, but when implemented, it is also possible to generate each of the video information, audio information, and meta information as the wireless packets through one operation.

When the meta data has been transmitted (S1740-N), the wireless audio packet or the wireless video packet may be packetized for transmission and transmitted. In this case, the wireless transmitting system (transmitting device 300) may increase the priority of the audio data over the video data so that the audio data may be transmitted first.

When all the data has been transmitted (S1760-Y), the transmission history is confirmed and it is confirmed whether the transmission of the current frame has been completed (S1780). The address of the buffer memory may increase. That is, the transmission of data of the next frame may proceed.

FIG. 18 is a diagram of an operation of generating a synchronization signal according to one or more embodiments of the present disclosure.

Referring to FIG. 18, the video decoder 420 may read the compressed stream from the reception memory, decoded, and then transmit the final image to a subsequent block (for example, an image quality processor).

After starting the decoding, the video decoder 420 may generate a vertical synchronization signal 1810 and a horizontal synchronization signal 1820 at every frame interval, and arrange and output image data according to the generated vertical synchronization signal and vertical synchronization signal.

Meanwhile, the operation of the video decoder 420 may be performed based on a start command output in response to the data reception operation of the reception module. For example, when the indexes of the meta data and the image match, the meta data may be transmitted to the processor side that processes the meta data after the trigger of the above-described sync signal.

A V_SYNC interrupt signal, which is one of the output signals of the video processor, may be used.

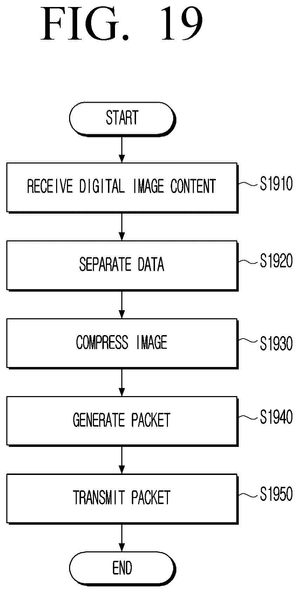

FIG. 19 is a flowchart of an operation of controlling an electronic apparatus according to one or more embodiments of the present disclosure.

Referring to FIG. 19, uncompressed type digital image content is received (S1910). Here, the uncompressed type digital image content may be an HDMI-type data signal.

The video information, the audio information, and the meta information in the digital image content is separated (S1920). Specifically, data outside the preset section within the digital image content may be separated into the image data, and the meta data and the audio data may be separated using the packet type value within the preset section. In this case, various control signals for synchronization of data described later may be generated. For example, the meta enable signal, the video enable signal, the audio enable signal, and the frame index may be generated.

The video data is encoded (S1930). For example, by using the video information in the preset units of lines among the video information, the encoding may be performed in the preset units of blocks. Specifically, when the video information in the preset units of lines among the plurality of video information constituting one frame in the digital image content is buffered, the encoding operation may be performed using the buffered video information in the preset units of lines.

The packet data corresponding to the wireless method is generated from the compressed video data, audio data, and meta data (S1940). For example, the packet data that includes one of the encoded data, the audio data, and the meta data and the classification information indicating a type of data in the data area may be generated.

The generated packet data may be transmitted using the wireless communication method. In this case, the meta data may be transmitted as a top priority, followed by data transmission in the order of audio data and video data.

As described above, since the method of controlling an electronic apparatus according to the present disclosure may wirelessly transmit the image content that is transmitted and received by wire, there is no need to use a wired cable. In addition, since the content is compressed and transmitted, the image data may be transmitted and received at high speed even using a wireless communication method that is currently commonly used.

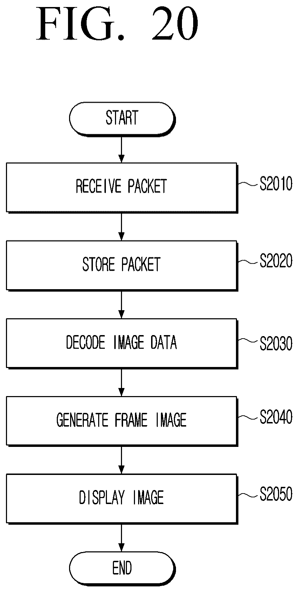

FIG. 20 is a flowchart of a display method according to one or more embodiments of the present disclosure.

Referring to FIG. 20, a network packet is received using the wireless communication method (S2010). For example, the wireless communication method described above may be a Wi-Fi method, and the corresponding network packet may be a network packet using the UDP protocol method. The network packet may be classified into the header and data.

Using the classification information in the received network packet, the data in the received network packet is stored in one of the video area, the audio area, and the meta area of the reception memory (S2020). Specifically, the classification information in the data area of the network packet is used to identify whether the received network packet is related to the video, the audio, or the meta data, and based on the identification result, the data of the received network packet may be stored in the memory area corresponding to the identified type. In this case, the field information indicating the above-described data types included in the corresponding data may be deleted and stored.

The data stored in the video area of the reception memory is decoded to generate the video data and the sync signal corresponding to the video data. Specifically, the decoding may be performed using data stored in the video area. In this case, the horizontal synchronization signal and the vertical synchronization signal may be generated based on the corresponding video data, and the data signal may be output in accordance with the timing of the generated synchronization signal.

The frame image is created using the generated sync signal and video data (S2040). Specifically, this operation is an operation within a general display apparatus, and an image quality improvement algorithm or the like related to general image processing may be performed to generate the frame image to be provided to the display.

The generated frame image is displayed on a display device (S2050).

As described above, the method of controlling a display apparatus according to the present disclosure may perform image display using an image received through a wireless communication method, so there is no need to use the wired cable. It is possible to improve the convenience of movement or aesthetics of the display apparatus.

Meanwhile, the above-described methods according to at least some of various embodiments of the present disclosure may be implemented in a form of application that may be installed in the existing electronic apparatus (or display apparatus).

In addition, the above-described methods according to at least some of various embodiments of the present disclosure may be implemented only by software upgrade or hardware upgrade of the existing electronic apparatus.

Further, the above-described methods according to at least some of various embodiments of the present disclosure can also be performed through an embedded server included in the electronic apparatus (or display apparatus) or an external server of at least one of the electronic apparatus.

Meanwhile, according to one or more embodiments of the disclosure, various embodiments described above may be implemented by software including instructions stored in a machine-readable storage medium (for example, a computer-readable storage medium). A machine is a device capable of calling a stored instruction from a storage medium and operating according to the called instruction, and may include the electronic apparatus (for example: electronic apparatus) of the disclosed embodiments. In the case in which a command is executed by the processor, the processor may directly perform a function corresponding to the command or other components may perform the function corresponding to the command under a control of the processor. The instruction may include codes created or executed by a compiler or an interpreter. The machine-readable storage medium may be provided in a form of a non-transitory storage medium. Here, the "non-transitory storage medium" means that the storage medium is a tangible device, and does not include a signal (for example, electromagnetic waves), and the term does not distinguish between the case where data is stored semi-permanently on a storage medium and the case where data is temporarily stored thereon. For example, the "non-transitory storage medium" may include a buffer in which data is temporarily stored. According to one or more embodiments, the methods according to various embodiments disclosed in the present document may be included and provided in a computer program product. The computer program product may be traded as a product between a seller and a purchaser. The computer program product may be distributed in the form of a machine-readable storage medium (for example, compact disc read only memory (CD-ROM)), or may be distributed (for example, download or upload) through an application store (for example, Play StoreTM) or may be directly distributed (for example, download or upload) between two user devices (for example, smartphones) online. In a case of the online distribution, at least some of the computer program products (for example, downloadable app) may be at least temporarily stored in a machine-readable storage medium such as a memory of a server of a manufacturer, a server of an application store, or a relay server or be temporarily created.

Various embodiments of the present disclosure may be implemented by software including instructions stored in a machine-readable storage medium (for example, a computer-readable storage medium). A machine is a device capable of calling a stored instruction from a storage medium and operating according to the called instruction, and may include the electronic apparatus (for example: electronic apparatus) of the disclosed embodiments.

In the case in which the above-described command is executed by the processor, the processor may directly perform a function corresponding to the command or other components may perform the function corresponding to the above-described command under a control of the processor. The instruction may include codes created or executed by a compiler or an interpreter.

Hereinafter, although exemplary embodiments of the present disclosure have been illustrated and described, the present disclosure is not limited to the above-described specific exemplary embodiments, but may be variously modified by those skilled in the art to which the present disclosure pertains without departing from the gist of the present disclosure as disclosed in the accompanying claims. These modifications should also be understood to fall within the scope and spirit of the present disclosure.

## Claims

1. An electronic apparatus, comprising:
an input/output interface configured to receive digital image content that is not compressed;
a communication device configured to transmit and receive data wirelessly;
at least one memory storing instructions; and
at least one processor configured to obtain packet data corresponding to the digital image content and control the communication device to transmit the packet data, wherein the at least one processor is further configured to execute the instructions to:
separate video information, audio information, and meta information in the digital image content;
perform encoding in preset units of blocks using the video information in preset units of lines among the video information to obtain encoded video information;
packetize each of the encoded video information, the audio information, and the meta information to obtain the packet data; and
control the communication device to wirelessly transmit the packet data to a display device.

2. The electronic apparatus as claimed in claim 1, wherein the at least one processor is further configured to execute the instructions to:
based on the video information in the preset units of lines among a plurality of video information constituting one frame in the digital image content being buffered video information, perform an encoding operation using the buffered video information in the preset units of lines.

3. The electronic apparatus as claimed in claim 2, wherein the at least one processor is further configured to execute the instructions to:
store information on the one frame in the at least one memory when the encoding of the one frame in the digital image content is completed; and
perform the encoding operation using the video information in the preset units of lines and frame information corresponding to the preset units of lines in a stored previous frame.

4. The electronic apparatus as claimed in claim 2, wherein the at least one processor comprises a plurality of encoding cores configured to perform the encoding in the preset units of blocks on a plurality of different lines.

5. The electronic apparatus as claimed in claim 2, wherein the at least one processor is further configured to execute the instructions to:
perform the encoding at a bit rate based on complexity of the video information during performing the encoding in the preset units of blocks.

6. The electronic apparatus as claimed in claim 1, wherein the at least one processor is further configured to execute the instructions to:
separate data outside a preset section in a signal received from the input/output interface into image information; and
confirm a packet type of a signal within the preset section to separate the meta information and the audio information.

7. The electronic apparatus as claimed in claim 1, wherein the at least one processor is further configured to execute the instructions to:
obtain a frame index based on a synchronization signal in a signal received from the input/output interface; and
add a header comprising the frame index to each of the encoded video information, the audio information, and the meta information.

8. The electronic apparatus as claimed in claim 1, wherein the at least one processor is further configured to execute the instructions to:
based on the audio information comprising an audio sample and a header corresponding to the audio sample:
merge a preset number of audio samples to obtain merged audio samples and obtain an audio payload;
obtain a header corresponding to the audio payload using headers of each of the merged audio samples; and
combine the audio payload and the header to obtain a wireless audio packet.

9. The electronic apparatus as claimed in claim 8, wherein the at least one processor is further configured to execute the instructions to:
obtain the header corresponding to the audio payload to comprise frame index information corresponding to a location of the audio information.

10. The electronic apparatus as claimed in claim 1, wherein the at least one processor is further configured to execute the instructions to:
merge the meta information in units of frames to obtain a meta payload;
obtain a meta header comprising frame index information corresponding to the meta information; and
combine the meta header and the meta payload to obtain a wireless meta packet.

11. The electronic apparatus as claimed in claim 1, wherein the at least one processor is further configured to execute the instructions to:
obtain the packet data comprising one of the encoded video information, the audio information, and the meta information and division information indicating a type of data in a data area.

12. The electronic apparatus as claimed in claim 1, wherein the at least one processor is further configured to execute the instructions to:
control the communication device to transmit the packet data corresponding to the meta information among the packet data with a highest priority.

13. A controlling method of an electronic apparatus, comprising, using at least one processor:
separating video information, audio information, and meta information in digital image content that is not compressed;
performing encoding in preset units of blocks using video information in preset units of lines among the video information to obtain encoded video information;
packetizing each of the encoded video information, the audio information, and the meta information to obtain packet data; and
controlling a communication device to wirelessly transmit the packet data to a display device.

14. The controlling method as claimed in claim 13, further comprising:
based on the video information in the preset units of lines among a plurality of video information constituting one frame in the digital image content being buffered video information, performing the encoding using the buffered video information in the preset units of lines.

15. A non-transitory computer-readable recording medium in which a program for causing at least one processor to execute a controlling method of an electronic apparatus is stored, wherein the controlling method comprises:
separating video information, audio information, and meta information in digital video content that is not compressed;
performing encoding in preset units of blocks using video information in preset units of lines among the video information to obtain encoded video information;
packetizing each of the encoded video information, the audio information, and the meta information to obtain packet data; and
controlling a communication device to wirelessly transmit the packet data to a display device.
